# EUROPEAN PATENT SPECIFICATION

(11) **EP 1 901 277 B1**
(45) Date of publication and mention of the grant of the patent: **06.06.2012**
(21) Application number: 07017272.1
(22) Date of filing: 04.09.2007
(51) Int. Cl.: G09G 3/36

(54) **Display apparatus**
Anzeigevorrichtung
Appareil d'affichage

(30) Priority: 18.09.2006 KR 20060090255
(43) Date of publication of application: 19.03.2008
(73) Proprietor: Samsung Electronics Co., Ltd., Yeongtong-gu Suwon-city, Gyeonggi-do 442-742 (KR)
(72) Inventor: Lee, Hong-Woo, Chungcheongnam-do (KR); Hur, Myung-Goo, Chungcheongnam-do (KR); Lee, Jong-Hwan, Gyeonggi-do (KR)
(74) Representative: Dr. Weitzel & Partner

(56) References cited:
- EP-A- 1 492 078
- US-A1- 2006 164 352

## Description

### BACKGROUND OF THE INVENTION

### FIELD OF THE INVENTION

The present invention relates to a Liquid Crystal Display (LCD) apparatus having main gate drivers for driving main pixels and sub-gate drivers for driving sub-pixels.

### DISCUSSION OF THE BACKGROUND

In general, an LCD apparatus may include an LCD panel including a bottom substrate, a top substrate facing the bottom substrate and a liquid crystal layer interposed between the bottom substrate and the top substrate. The LCD panel may also include gate lines, data lines and pixels connected to the gate lines and the data lines. Signals are supplied to the gate lines and data lines to apply an electric field across the liquid crystal layer. Since the liquid crystals in the liquid crystal layer may have an anisotropic dielectric constant, the alignment of the liquid crystals may change when the electric field is applied across the liquid crystal layer. In addition, since the liquid crystals have an anisotropic refractive index, light transmittance of the LCD apparatus may vary according to the alignment of the liquid crystals. The LCD apparatus applies an electric field between the two substrates such that the liquid crystals have a light transmittance corresponding to display information transmitted as data signals. Thus, the alignment of the liquid crystals may vary according to the applied electric field.

Further, the alignment of the liquid crystals may control the transmission of backlight illumination through the liquid crystal layer to display images on the LCD apparatus.

The LCD apparatus may include a gate driver for sequentially outputting a gate pulse to the gate lines and a data driver for outputting a data voltage to the data lines. The gate driver and the data driver may each be arranged as a chip on a film of the LCD panel.

Recently, in order to reduce the number of chips, an LCD apparatus may employ a gate-IC-less (GIL) structure in which the gate driver is arranged directly on the bottom substrate by a thin film forming process. In the LCD apparatus with the GIL structure, the gate driver may include a shift register having multiple stages connected in series to provide gate pulses to the gate lines.

In addition, patterned vertical alignment (PVA) mode LCD apparatuses, multi-domain vertical alignment (MVA) mode LCD apparatuses, and super-patterned vertical alignment (S-PVA) mode LCD apparatuses have been developed in order to improve the viewing angle of LCD apparatuses.

For example, an S-PVA mode LCD apparatus may have a pixel including two sub-pixels, in which each sub-pixel has a main pixel electrode and a sub-pixel electrode and different sub-voltages are applied to the main pixel electrode and the sub-pixel electrode in order to form domains having different grays. Since an observer viewing an image displayed on the LCD apparatus may recognize an intermediate value between the main voltage and the different sub-voltage, the lateral viewing angle of the LCD apparatus may not be narrowed by the distortion of a gamma curve at the intermediate gray level, so that the lateral visibility of the LCD apparatus may be improved.

The S-PVA mode LCD apparatuses may be classified as a coupling capacitor (CC) type LCD apparatus or a two transistor (TT) type LCD apparatus according to the driving scheme thereof.

A CC type LCD apparatus may further include a coupling capacitor between the main pixel electrode and the sub-pixel electrode. The main voltage applied to the main pixel electrode may be modified by a stored voltage in the capacitor. Therefore, the main voltage applied to the main pixel electrode may be different from the sub-voltage applied to the sub-pixel electrode.

A TT type LCD apparatus may employ two transistors that are turned on sequentially with a predetermined time interval to apply main voltages to the main electrodes and sub-pixel voltages to the sub-pixel electrodes, where the main voltages and the sub-pixel voltages have different voltage levels. However, the driving frequency for the TT type LCD apparatus may be increased in order to drive the two transistors. The increase in driving frequency may increase the power consumption of the TT type LCD apparatus.

Further, in the TT type S-PVA mode LCD apparatus having the GIL structure, the number of stages of the gate driver may increase since twice the number of transistors may be driven. The additional stages in the gate driver may increase the size of the LCD panel, which also may increase power consumption of the LCD apparatus.

US 2006/164352 A1 describes a liquid crystal display apparatus including a plurality of pixels having first and second subpixels, a plurality of gate lines connected to the first and second subpixels to transmit gate signals, a plurality of first data lines intersecting the gate lines and connected to the first subpixels to transmit first data voltages, and a plurality of second data lines intersecting the gate lines and connected to the second subpixels to transmit second data voltages. The first and second data voltages have different sizes and are obtained from single image information. Each pixel is divided into a pair of subpixels, and different data voltages are applied to the subpixels through two different data lines, so that it is possible to secure a wide viewing angle and improve side visibility.

EP-A-1 492 078 describes a liquid crystal display apparatus including a liquid crystal panel assembly having pixels arranged in a matrix form, which have a first group of pixels and a second group of pixels, gate lines having a first group of gate lines and a second group of gate lines that are connected with the first group of pixels and the second group of pixels, respectively, and data lines each of which is connected with one of the first group of pixels and one of the second group of pixels in every row of the matrix form. The liquid crystal display apparatus also includes a signal controller that receives input image signals and generates two groups of image data, a data driver that receives the two groups of image data and provides data voltages corresponding to the image data to the data lines, and a gate driving unit including a first gate driver that provides first gate-on signals to the first group of gate lines and a second gate driver that provides second gate-on signals to the second group of gate lines.

### SUMMARY OF THE INVENTION

This invention provides a LCD apparatus capable of minimizing the size thereof while saving power consumption by reducing the driving frequency.

Additional features of the invention will be set forth in the description which follows, and in part will be apparent from the description, or may be learned by practice of the invention.

This invention provides a display apparatus including a first substrate including a plurality of main gate lines, a plurality of sub-gate lines connected to the gate of a second transistor, a plurality of data lines, and a pixel, the pixel including a main pixel comprising a main thin film transistor connected to a data line and having gate connected to a first main gate line, and a sub-pixel comprising a sub-thin film transistor connected to the data line and having gate connected to a first sub-gate line, wherein the main pixel and the sub-pixel are directly relating one to the other forming domains having different grays, a second substrate coupled with the first substrate and facing the first substrate, a main gate driver comprises a shift register having a first stage and a second stage connected in series, the first stage to apply a first main gate pulse to the first main gate line during a first period of a duration 1H, wherein the first stage receives a first clock signal having a high level during a period corresponding to the first period to output the first main gate pulse when the first clock signal has a high level, and the second stage receives a second clock signal having an inverted level relative to the first clock signal to output a second main gate pulse to a second main gate line when the second clock signal has a high level, a sub-gate driver to apply a first sub-gate pulse to the first sub-gate line during a second period of a duration H/2, wherein the second period is completely included in the first period, and a data driver to apply a sub-pixel voltage to the data line during the second period, and to apply a main pixel voltage to the data line during a third period of a duration H/2 being completely included in the first period that is different from the second period, wherein the third period takes place after the completion of the second period, wherein the main thin film transistor is adapted, in response to the first sub-gate pulse, to output the sub-pixel voltage to the main pixel during the second period, and to output the main pixel voltage to the main pixel during the third period in response to the first main gate pulse; and the sub-thin film transistor is adapted to output the sub-pixel voltage to the sub-pixel during the first period in response to the first sub-gate pulse. The sub-gate driver comprises a first inverter and a second inverter, wherein the first inverter is adapted to receive the first main gate pulse and to receive a third clock signal having a low level during a period corresponding to the second period so as to output the first sub-gate pulse to the sub-gate line during the second period when the third clock signal has a low level, and the second inverter is adapted to receive the second main gate pulse and to receive a fourth clock signal having an inverted level relative to the third clock signal so as to output the second sub-gate pulse when the fourth clock signal has a low level, and the main pixel voltage has a level higher than a level of the sub-pixel voltage.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 shows a plan view of an LCD apparatus according to an exemplary embodiment of the present invention.

FIG. 2 shows a circuit diagram of an equivalent circuit for internal blocks of main gate drivers, sub-gate drivers, and pixels shown in FIG. 1.

FIG. 3 shows an internal circuit diagram of a stage of a main gate driver shown in FIG. 2.

FIG. 4 shows an internal circuit diagram of an inverter of a sub-gate driver shown in FIG. 2.

FIG. 5 shows a timing diagram for waveforms of a first clock, a second clock, a third clock, a fourth clock, a first main gate pulse, a second main gate pulse, a first sub-gate pulse, and a second sub-gate pulse shown in FIG. 2.

FIG, 6 shows a timing diagram for waveforms of a first main pixel voltage, a second main pixel voltage, a first sub-pixel voltage, and a second sub-pixel voltage corresponding to a first main gate pulse, a second main gate pulse, a first sub-gate pulse, and a second sub-gate pulse.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

It will be understood that when an element or layer is referred to as being "on" or "connected to" another element or layer, it can be directly on or directly connected to the other element or layer, or intervening elements or layers may be present. In contrast, only when an element is referred to as being "directly on" or "directly connected to" another element or layer are there are no intervening elements or layers present.

It will also be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the present invention.

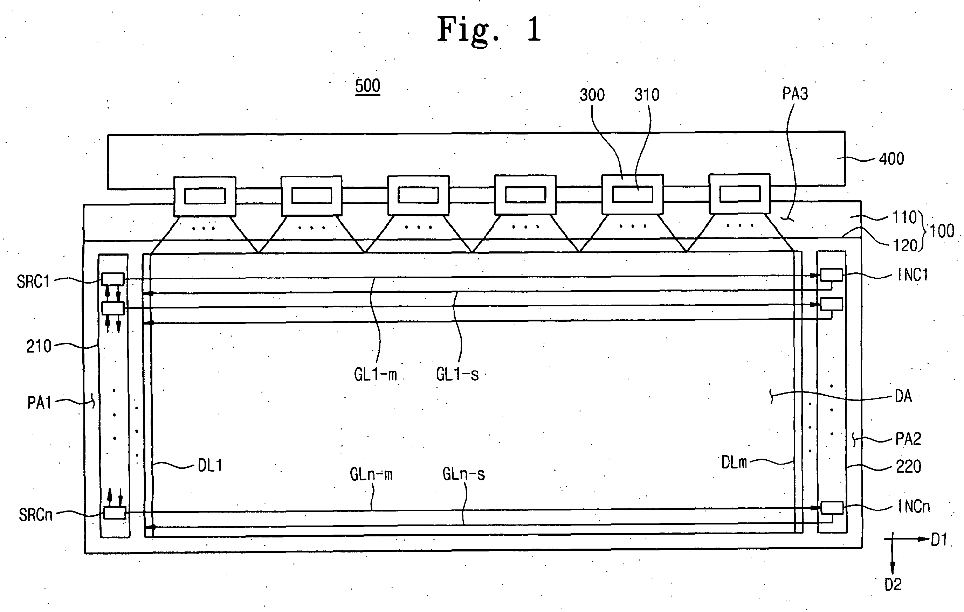

FIG. 1 shows a plan view of an LCD apparatus according to an exemplary embodiment of the present invention. The LCD apparatus 500 shown in FIG. 1 may be an S-PVA LCD apparatus having a pixel including a main pixel and a sub-pixel.

Referring to FIG. 1, the S-PVA LCD apparatus 500 may include a LCD panel 100 for displaying images, a printed circuit board 400 arranged proximate to the LCD panel 100, and a tape carrier package 300 connecting the LCD panel 100 to the printed circuit board 400.

The LCD panel 100 may include an array substrate 110, a color filter substrate 120 facing the array substrate 110, and a liquid crystal layer (not shown) interposed between the array substrate 110 and the color filter substrate 120. The array substrate 110 may be divided into a display area DA for displaying images and a first peripheral area PA1, a second peripheral area PA2, and a third peripheral area PA3 arranged adjacent to the display area DA.

Pixels may be arranged in a matrix in the display area DA of the array substrate 110. The display area DA may also include main gate lines GL1-m to GLn-m (where n is an integer equal to or greater than 1) extending in a first direction D1, sub-gate lines GL1-s to GLn-s also extending in the first direction D1, and data lines DL1 to DLm (where m is an integer equal to or greater than 1) extending in a second direction D2 substantially perpendicular to the first direction D1. The pixels may be arranged in pixel areas defined by the gate lines and data lines. Each pixel may include a main pixel and a sub-pixel. A main pixel may be connected to a corresponding main gate line and a data line. A sub-pixel may be connected to a corresponding sub-gate line and the data line.

Color pixels such as red, green, and blue color pixels, including red, green, and blue color filters to filter red, green, and blue light respectively, may be arranged on the color filter substrate 120 corresponding to the pixel areas.

The first peripheral area PA 1 may be arranged proximate to first ends of the main gate lines GL1-m to GLn-m, and may include a main gate driver 210 that sequentially applies main gate pulses to the main gate lines GL1-m to GLn-m. The main gate driver 210 may include a shift register having stages SRC1 to SRCn, which are connected together in series. Output terminals of the stages SRC1 to SRCn may be connected to the main gate lines GL1-m to GLn-m, respectively. Main gate lines GL1-m to GLn-m may correspond in a one-to-one relationship with stages SRC 1 to SRCn. Thus, the stages SRC 1 to SRCn may sequentially apply main gate pulses to the corresponding main gate lines.

The second peripheral area PA2 may be arranged proximate to second ends of the main gate lines GL1-m to GLn-m. The second peripheral area PA2 may include a sub-gate driver 220, which is connected to the main gate lines GL1-m to GLn-m to receive the main gate pulses and then output the sub-gate pulses to the sub-gate lines GL1-s to GLn-s. The sub-gate driver 220 may include inverters INC1 to INCn, which may be connected to the sub-gate lines GL1-s to GLn-s. Sub-gate lines GL1-s to GLn-s may correspond in a one-to-one relationship with inverters INC 1 to INCn. Thus, the inverters INC1 to INCn may apply sub-gate pulses to the corresponding sub-gate lines while being turned on.

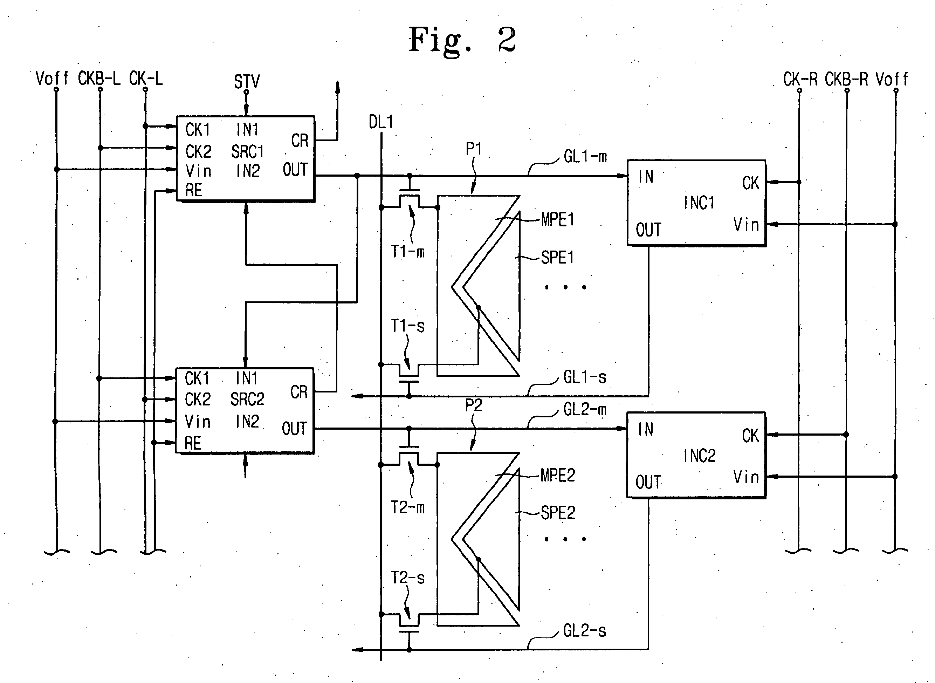

The stages SRC 1 to SRCn of the main gate driver 210 and the inverters INC 1 to INCn of the sub-gate driver 220 will be described in more detail below with reference to FIG. 2, FIG. 3, FIG. 4, FIG. 5, and FIG. 6.

In the present exemplary embodiment of the present invention, the main gate driver 210 and the sub-gate driver 220 may be arranged on the array substrate 110 substantially simultaneously with the pixels through a manufacturing process such as a thin film forming process. In this manner, the main gate driver 210 and the sub-gate driver 220 may be integrated onto the array substrate 110, so that drive chips are not necessary. As a result, the size of the LCD apparatus 500 may be reduced.

The third peripheral area PA3 may be arranged adjacent to an end of the data lines DL1 to DLm, and a first end of a tape carrier package 300 may be connected to the third peripheral area PA3. A second end of the tape carrier package 300 may be connected to the printed circuit board 400. Data driving chips 310 may be arranged on the tape carrier package 300 to provide data signals to the data lines DL1 to DLm. Accordingly, the data driving chips 310 may provide the data signals to the data lines DL1 to DLm in response to control signals output from the printed circuit board 400.

A first gate control signal may be applied to the main gate driver 210 from the printed circuit board 400 through the tape carrier package 300. In addition, a second gate control signal may be applied to the sub-gate driver 220 from the printed circuit board 400 through the tape carrier package 300. Thus, the main gate driver 210 may provide main gate pulses to the main gate lines GL1-m to GLn-m in response to the first gate control signal. The sub-gate driver 220 may provide sub-gate pulses to the sub-gate lines GL1-s to GLn-s in response to the second gate control signal.

FIG. 2 shows a circuit diagram of an equivalent circuit for internal blocks of main drivers, sub-gate drivers, and pixels shown in FIG. 1.

Referring to FIG. 2, a first pixel P1 may be connected to the first main gate line GL1-m, the first sub-gate line GL1-s, and the first data line DL1, and a second pixel P2 may be connected to the second main gate line GL2-m, the second sub-gate line GL2-s, and the first data line DL1.

The first pixel P 1 may include a first main pixel and a first sub-pixel. The first main pixel may include a first main thin film transistor T1-m and a first main pixel electrode MPE1, and the first sub-pixel may include a first sub-thin film transistor T1-s and a first sub-pixel electrode SPE1.

The first main thin film transistor T1-m may be connected to the first main gate line GL1-m and the first data line DL1, and the first sub-thin film transistor T1-s may be connected to the first sub-gate line GL1-s and the first data line DL1. More specifically, a gate electrode of the first main thin film transistor T1-m may be connected to the first main gate line GL1-m, a source electrode of the first main thin film transistor T1-m may be connected to the first data line DL1, and a drain electrode of the first main thin film transistor T1-m may be connected to the first main pixel electrode MPE1. A gate electrode of the first sub-thin film transistor T1-s may be connected to the first sub-gate line GL1-s, a source electrode of the first sub-thin film transistor T1-s may be connected to the first data line DL1, and a drain electrode of the first sub-thin film transistor T1-s may be connected to the first sub-pixel electrode SPE1.

The second pixel P2 may include a second main pixel and a second sub-pixel. The second main pixel may include a second main thin film transistor T2-m and a second main pixel electrode MPE2, and the second sub-pixel may include a second sub-thin film transistor T2-s and a second sub-pixel electrode SPE2.

The second main thin film transistor T2-m may be connected to the second main gate line GL2-m, the first data line DL1 and the second main pixel electrode MPE2, and the second sub-thin film transistor T2-s may be connected to the second sub-gate line GL2-s, the first data line DL1 and the second sub-pixel electrode SPE2. More specifically, a gate electrode of the second main thin film transistor T2-m may be connected to the second main gate line GL2-m, a source electrode of the second main thin film transistor T2-m may be connected to the first data line DL1, and a drain electrode of the second main thin film transistor T2-m may be connected to the second main pixel electrode MPE2. A gate electrode of the second sub-thin film transistor T2-s may be connected to the second sub-gate line GL2-s, a source electrode of the second sub-thin film transistor T2-s may be connected to the first data line DL1, and a drain electrode of the second sub-thin film transistor T2-s, may be connected to the second sub-pixel electrode SPE2.

A first stage SRC 1 of the main gate driver 210 may be connected to the first main gate line GL1-m to apply a first main gate pulse to the first main gate line GL1-m.

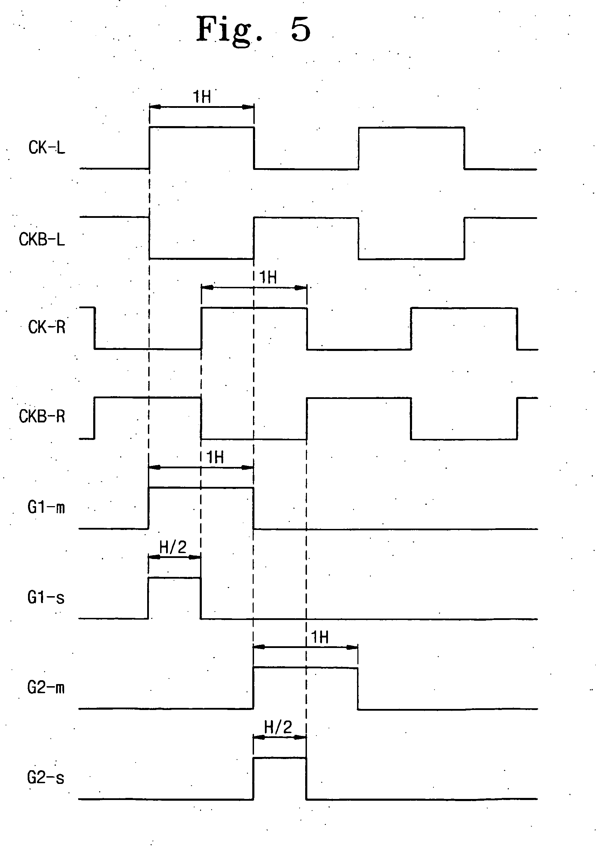

The first stage SRC1 may include first input terminal IN1 and second input terminal IN2, first clock terminal CK1 and second clock terminal CK2, an off voltage input terminal Vin, an output terminal OUT, a carry terminal CR, and a Reset Terminal RE. A start signal STV may be applied to the first input terminal IN1, first clock signal CK-L may be applied to the first clock terminal CK1, and second clock signal CKB-L may be applied to the second clock terminal CK2. As shown in FIG. 5 and described in more detail below, the second clock signal CKB-L may have inverted signal levels relative to the first clock signal CK-L.

A gate off voltage Voff may be applied to the off voltage input terminal Vin. In another exemplary embodiment of the present invention, a ground voltage may be applied to the off voltage input terminal Vin. Gate off voltage Voff may be selected based on a threshold voltage of the main thin film transistors T1-m to Tn-m in the main pixels, and may vary depending whether the thin film transistors are, for example, p-type thin film transistors or n-type thin film transistors.

The first main gate pulse may be output from output terminal OUT to first main gate line GL1-m, and a carry signal may be output from the carry terminal CR. In addition, a carry signal output from a second stage SRC2 may be applied to the second input terminal IN2.

The second stage SRC2 of the main gate driver 210 may be connected to the second main gate line GL2-m to apply a second main gate pulse to the second main gate line GL2-m.

The second stage SRC2 may have a structure identical to that of the first stage SRC 1. First clock signal CK-L may be applied to the second clock terminal CK2, and second clock signal CKB-L may be applied to the first clock terminal CK1. This arrangement may be similar for additional stages in the main gate driver 210. Specifically, the first clock signal CK-L may be applied to first clock terminals CK1 of odd-numbered stages and second clock terminals CK2 of even-numbered stages of the main gate driver 210. In addition, the second clock signal CKB-L may be applied to second clock terminals CK2 of odd-numbered stages and first clock terminals CK1 of even-numbered stages of the main gate driver 210.

Although FIG. 2 shows only the first stage SRC1 and the second stage SRC2 of the main gate driver 210, subsequent stages SRC3 to SRCn may have structures identical to those of the first stage SRC 1 and the second stage SRC2, so detailed description thereof will be omitted. A carry signal may be provided from the final stage SRCn to reset terminals RE of the stages to reset the stages.

The first inverter INC1 of the sub-gate driver 220 may be connected to the first main gate line GL1-m and to the first sub-gate line GL1-s, and may apply the first sub-gate pulse to the first sub-gate line GL1-s in response to receiving the first main gate pulse.

The first inverter INC1 may include an input terminal IN, a clock terminal CK, an off voltage input terminal Vin, and an output terminal OUT. The first main gate pulse may be received at the input terminal IN, and a third clock signal CK-R may be applied to the clock terminal CK. The gate off voltage Voff may be applied to the off voltage input terminal Vin and the first sub-gate pulse may be output from the output terminal OUT. Gate off voltage Voff may be the same as gate off voltage Voff applied to the first stage SRC1. Alternatively, gate off voltage Voff applied to the inverter INC 1 to INCn may be selected based on a threshold voltage of sub-thin film transistors T1-s to Tn-s in the sub-pixels, and may vary depending whether the sub-thin film transistors are, for example, p-type thin film transistors or n-type thin film transistors.

The second inverter INC2 of the sub-gate driver 220 may be connected to the second main gate line GL2-m and may apply the second sub-gate pulse to the second sub-gate line GL2-s in response to receiving the second main gate pulse. The second inverter INC2 may include a structure substantially identical to that of the first inverter INC1. However, a fourth clock signal CKB-R may be applied to the clock terminal CK of the second inverter INC2. As shown in FIG. 5 and described in more detail below, the fourth clock signal CKB-R may have inverted signal levels relative to the third clock signal CK-R.

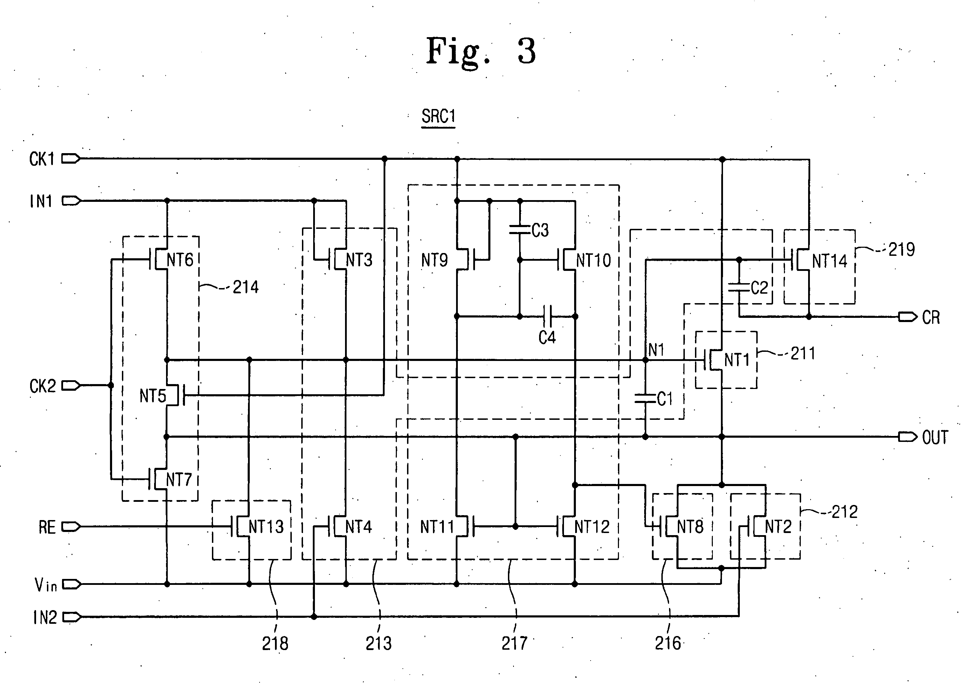

FIG. 3 shows an internal circuit diagram of a first stage SRC1 of the main gate driver shown in FIG. 2.

Referring to FIG. 3, the first stage SRC1 may include a pull-up section 211, a pull-down section 212, a pull-up driver 213, an anti-ripple section 214, a holding section 216, a switching section 217, a reset section 218, and a carry section 219.

The pull-up section 211 may include a pull-up transistor NT1 including a control electrode connected to the pull-up driver 213, an input electrode connected to the first clock terminal CK1, and an output electrode connected to the output terminal OUT. The first clock signal CK-L may be applied to the first clock terminal CK1. The pull-up transistor NT1 may output the first clock signal CK-L to the output terminal OUT in response to the control voltage provided from the pull-up driver 213. Accordingly, the first main gate pulse may be pulled up by the first clock signal CK-L having a high level during a 1H period, which will be described in more detail with respect to FIG. 5 below.

**The** carry section 219 may include a carry transistor NT14 including a control electrode connected to the pull-up driver 213, an input electrode connected to the first clock terminal CK1, and an output electrode connected to the carry terminal CR. The carry transistor NT14 may output the first clock signal CK-L to the carry terminal CR in response to the control voltage provided from the pull-up driver 213. Accordingly, the first carry signal may increase to a high level by the first clock signal CK-L during the 1H period.

The pull-down section 212 may include a pull-down transistor NT2 including a control electrode connected to the second input terminal IN2, an input electrode connected to the output terminal OUT, and an output electrode connected to the off voltage input terminal Vin. A carry signal from a subsequent stage, such as the second stage SRC2, may be applied to the second input terminal IN2, and the gate off voltage Voff may be applied to the off voltage input terminal Vin. The pull-down transistor NT2 may pull down the first main gate pulse, which has been pulled up by the first clock signal CK-L, in response to the second main gate pulse such that the first main gate pulse has a level corresponding to that of the gate off voltage Voff.

The pull-up driver 213 may include a buffer transistor NT3, a first capacitor C1, a second capacitor C2 and a discharge transistor NT4. The buffer transistor NT3 may include an input terminal and a control electrode, which are both connected to the first input terminal IN1, and an output electrode connected to the control electrode of the pull-up transistor NT1. A start signal STV may be applied to the first input terminal IN1 of the first stage SRC1. The first capacitor C 1 may be arranged between the control electrode and the output electrode of the pull-up transistor NT1, and the second capacitor C2 may be arranged between the control electrode and the output electrode of the carry transistor NT 14. The discharge transistor NT4 may include an input electrode connected to the output electrode of the buffer transistor NT3, a control electrode connected to the second input terminal IN2, and an output electrode connected to the off voltage input terminal Vin.

When the buffer transistor NT3 is turned on in response to the start signal STV, the first capacitor C1 and the second capacitor C2 may be charged. If the first capacitor C1 is charged with a voltage equal to or greater than the threshold voltage of the pull-up transistor NT1, the pull-up transistor NT1 may be turned on. Thus, the first clock signal CK-L may be output to the output terminal OUT by way of the pull-up transistor NT1, so that the first main gate pulse has a high level.

When the discharge transistor NT4 is turned on in response to a carry signal from a subsequent stage, a voltage stored in the first capacitor C1 may be discharged to the level of the gate off voltage Voff through the discharge transistor NT4. Accordingly, an electric potential of a first node N1 may be reduced to the level of the gate off voltage Voff, and the pull-up transistor NT1 may be turned off to reduce the first main gate pulse to a low level.

The anti-ripple section 214 may include first anti-ripple transistor NT5, second anti-ripple transistor NT6, and third anti-ripple transistor NT7. The first anti-ripple transistor NT5 may include a control electrode connected to the first clock terminal CK1, an input electrode connected to the output electrode of the pull-up transistor NT1, and an output electrode connected to the control electrode of the pull-up transistor NT1. The second anti-ripple transistor NT6 may include a control electrode connected to the second clock terminal CK2, an input electrode connected to the first input terminal IN1, and an output electrode connected to the control electrode of the pull-up transistor NT1. The third anti-ripple transistor NT7 may include a control electrode connected to the second clock terminal CK2, an input electrode connected to the output electrode of the pull-up transistor NT1, and an output electrode connected to the off voltage input terminal Vin. The second clock signal CKB-L may be applied to the second clock terminal CK2.

The first anti-ripple transistor NT5 may provide the first main gate pulse, which may be output from the output terminal OUT, to the control electrode of the pull-up transistor NT1 in response to the first clock signal CK-L applied to first clock terminal CK1. Thus, the electric potential of the first node N1 can be maintained at a level corresponding to the level of the gate off voltage Voff due to the first main gate pulse, to thereby prevent the ripple of the first node N1. The second anti-ripple transistor NT6 may provide the start signal STV applied to the first input terminal IN1 to the first node N1 in response to the second clock signal CKB-L applied to the second clock terminal CK2. Since the start signal STV is maintained in a low state, the electric potential of the first node N1 may be maintained at a low level so that the ripple of the first node N1 can be prevented. In addition, the third anti-ripple transistor NT7 may reduce a level of the first main gate pulse.to a level corresponding to the gate off voltage Voff in response to the second clock signal CKB-L, thereby preventing the ripple of the first main gate pulse.

The holding section 216 may include a holding transistor NT8 including a control electrode connected to the output terminal of the main inverter 217, an input electrode connected to the output terminal OUT, and an output electrode connected to the off voltage input terminal Vin.

The main inverter 217 may include a first inverter transistor NT9, a second inverter transistor NT10, a third inverter transistor NT11, a fourth inverter transistor NT12, a third capacitor C3, and a fourth capacitor C4. The main inverter 217 may apply a signal to the control terminal of the holding transistor NT8 to turn the holding transistor NT8 on and off.

The first inverter transistor NT9 may include an input electrode and a control electrode, which are both connected to the first clock terminal CK1, and an output electrode connected to an output electrode of the second inverter transistor NT10 through the fourth capacitor C4. The second inverter transistor NT10 may include an input electrode connected to the first clock terminal CK1, a control electrode connected to the input electrode through the third capacitor C3, and an output electrode connected to the control electrode of the holding transistor NT8. The third inverter transistor NT11 may include an input electrode connected to the output electrode of the first inverter transistor NT9, a control electrode connected to the output terminal OUT, and an output electrode connected to the off voltage input terminal Vin. The fourth inverter transistor NT12 may include an input electrode connected to the control electrode of the holding transistor NT8, a control electrode connected to the output terminal OUT, and an output electrode connected to the off voltage input terminal Vin.

**The** third inverter transistor NT11 and the fourth inverter transistor NT12 may be turned on in response to the first main gate pulse during the 1H period where the first main gate pulse is at a high level. Thus, the first clock signal CK-L output from the first inverter transistor NT9 and the second inverter transistor NT10 may be discharged to a level corresponding to a level of the gate off voltage Voff through the third inverter transistor NT11 and the fourth inverter transistor NT12. Accordingly, during the 1H period, the output terminal of the main inverter 217 may output the gate off voltage Voff to the control terminal of the holding transistor NT8, and the holding transistor NT8may be turned off.

After that, when the first main gate pulse has a low level, the third inverter transistor NT11 and the fourth inverter transistor NT12 may be turned off. As a result, the main inverter 217 may output the first clock signal CK-L from the first inverter transistor NT9 and the second inverter transistor NT10. Thus, when the first clock signal CK-L output from the main inverter 217 has a high level, the holding transistor NT8 discharges the first main gate pulse to a level corresponding to the level of the gate off voltage Voff.

Meanwhile, the reset section 218 may include a reset transistor NT13 including a control electrode connected to a reset terminal RE, an input electrode connected to the control electrode of the pull-up transistor NT1, and an output electrode connected to the off voltage input terminal Vin. The reset transistor NT13 may reduce the voltage of the first node N1 to a level corresponding to the level of the gate off voltage Voff in response to the final carry signal generated in the last stage SRCn, which may be input into the reset transistor NT13 through the reset terminal RE. Thus, the pull-up and carry transistors NT1 and NT14 may be turned off in response to the final carry signal of the last stage SRCn.

The final carry signal may be provided to reset terminals RE of the stages to turn off pull-up transistor NT1 and carry transistor NT 14 of the stages, thereby resetting the stages.

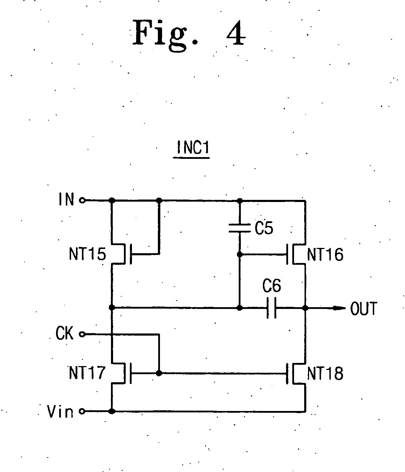

FIG. 4 shows an internal circuit diagram of an inverter INC1 of the sub-gate driver shown in FIG. 2.

Referring to FIG. 4, the first inverter INC1 may include fifth inverter transistor NT15, sixth inverter transistor NT16, seventh inverter transistor NT17, eighth inverter transistor NT 18, fifth capacitor C5, and sixth capacitor C6.

The fifth inverter transistor NT15 may include an input electrode and a control electrode, which are both connected to the input terminal IN, and an output electrode connected to a first electrode of the sixth capacitor C6. A second electrode of the sixth capacitor C6 may be connected to the output terminal OUT. The sixth inverter transistor NT16 may include an input electrode connected to the input terminal IN, a control electrode connected to the output electrode of the fifth inverter transistor NT15, and an output electrode connected to the output terminal OUT. The fifth capacitor C5 may be arranged between the input terminal IN and the control electrode of the sixth inverter transistor NT16. The seventh inverter transistor NT17 may include an input electrode connected to the output electrode of the fifth inverter transistor NT15, a control electrode connected to the clock terminal CK, and an output electrode connected to the off voltage input terminal Vin. The eighth inverter transistor NT18 may include an input electrode connected to the output terminal OUT, a control electrode connected to the clock terminal CK, and an output electrode connected to the off voltage input terminal Vin.

The fifth inverter transistor NT15 and the sixth inverter transistor NT16 may be turned on in response to the first main gate pulse being at a high level during the 1H period where the first main gate pulse, which is input to the input terminal IN, has a high level. Meanwhile, the seventh inverter transistor NT17 and the eighth inverter transistor NT18 may be offwhen third clock signal CK-R input to the clock terminal CK has a low level. At this time, the first main gate pulse, which passes through the fifth inverter transistor NT15 and the sixth inverter transistor NT16 during a first H/2 period that overlaps with the low period of the third clock signal CK-R, is output through the output terminal OUT. Thus, during the first H/2 period, the first main gate pulse may be output to the first sub-gate line GL1-s as a first sub-gate pulse.

Then, if a level of the third clock signal CK-R is shifted to a high level, the seventh inverter transistor NT17 and the eighth inverter transistor NT18 may be turned on. Thus, the first main gate pulse, which is output from the fifth inverter transistor NT1 5 and the sixth inverter transistor NT16 during a second H/2 period, may be discharged to a level corresponding to the level of the gate off voltage Voff when the seventh inverter transistor NT17 and the eighth inverter transistor NT18 turn on. Accordingly, during the second H/2 period when the third clock signal CK-R is at a high level, the output terminal OUT may output the first sub-gate pulse at a level corresponding to the level of the gate off voltage Voff.

In this manner, since one pixel includes a main pixel and a sub-pixel in the S-PVA LCD apparatus 500, the main pixel and the sub-pixel may be turned on during the 1H period to drive one pixel row including the main pixel and the sub-pixel.

Each subsequent inverter INC2 to INCn of the sub-gate driver 220 may have a structure substantially identical to that of the main inverter INC1 included in sub-gate driver 220. Accordingly, the sub-gate driver 220 can be operated with fewer transistors as compared with the main gate driver 210. As a result, the size of the sub-gate driver 220 can be smaller than the size of the main gate driver 210, and the manufacturing process of the S-PVA LCD apparatus 500 can be simplified.

Now, the 1H period and the H/2 period will be explained in more detail. According to illustrated embodiments of the present invention, the main gate driver 210 may sequentially generate the main gate pulse to have a high level signal during a time period of 1H, which may include a period equal to one-half of the period of the main gate pulse. The sub-gate driver 220 may generate the sub-gate pulse during the first H/2 period of 1H. The first period H/2 may be one-quarter of the period of the main gate pulse period and one-half of the 1H period. The sub-gate driver 220 may include a plurality of inverters INC1 to INCn, in which each inverter receives a main gate pulse and a third clock signal CK-R or a fourth clock signal CKB-R, each of which is delayed by an H/2 period as compared with the first clock signal CK-L or second clock signal CKB-L applied to the main gate driver 210, to generate a sub-gate pulse.

In addition, the first clock signal CK-L, the second clock signal CKB-L, the third clock signal CK-R, and the fourth clock signal CKB-R have the same frequency and a period set corresponding to the 2H period equal to the period of the main gate pulse. Therefore, the driving frequency of the main gate driver 210 and the sub-gate driver 220 may remain constant, thereby reducing power consumption of the S-PVA LCD apparatus 500.

FIG. 5 shows a timing diagram for waveforms of a first clock, a second clock, a third clock, a fourth clock, a first main gate pulse, a second main gate pulse, a first sub-gate pulse, and a second sub-gate pulse shown in FIG. 2.

Referring to FIG. 5, the first clock signal CK-L has a high level during the 1H period where a first main thin film transistor is turned on. In addition, since the first clock signal CK-L has a signal with an inverted level with respect to the second clock signal CKB-L, the second clock signal CKB-L has a phase shift of 1H period relative to the first clock signal CK-L. Further, since the third clock signal CK-R has a signal with an inverted level with respect to the fourth clock signal CKB-R, the fourth clock signal CKB-R has a phase shift of 1H period relative to the third clock signal CK-R. In addition, the third clock signal CK-R has a phase shift of H/2 period relative to the first clock signal CK-L, and the fourth clock signal CKB-R has a phase shift of H/2 period relative to the second clock signal CKB-L.

**During** the 1H period, the first stage SRC 1 outputs the first main gate pulse G1-m having a high level corresponding to the high level of the first clock signal CK-L. The first inverter INC1 outputs the first sub-gate pulse G1-s in response to receiving the first main gate pulse G1-m and the third clock signal CK-R during the first H/2 period of 1H period. Accordingly, the first main gate pulse G1-m and the first sub-gate pulse G1-s have a high level during the first H/2 period of 1H period, and are applied to the first main gate line GL1-m and the first sub-gate line GL1-s, respectively.

**After** the first H/2 period of 1H period, the first sub-gate pulse G1-s output from the first inverter INC1 is discharged to a low level corresponding to the level of the gate off voltage Voff. Thus, only the first main gate pulse G1-m has a high level during the second H/2 period of 1H period.

**During** the next 1H period, the second stage SRC2 outputs the second main gate pulse G2-m corresponding to the high period of the second clock signal CKB-L. The second inverter INC2 outputs the second sub-gate pulse G2-s in response to receiving the second main gate pulse G2-m and the fourth clock signal CKB-R during the first H/2 period of the next 1H period. Accordingly, the second main gate pulse G2-m and the second sub-gate pulse G2-s have a high level during the first H/2 period of the next 1H period and are applied to the second main gate line GL2-m and the second sub-gate line GL2-s, respectively.

After that, the second sub-gate pulse G2-s output from the second inverter INC2 is discharged to a low level corresponding to the level of the gate off voltage Voff. Thus, only the second main gate pulse G2-m has a high level during the second H/2 period of the next 1H period.

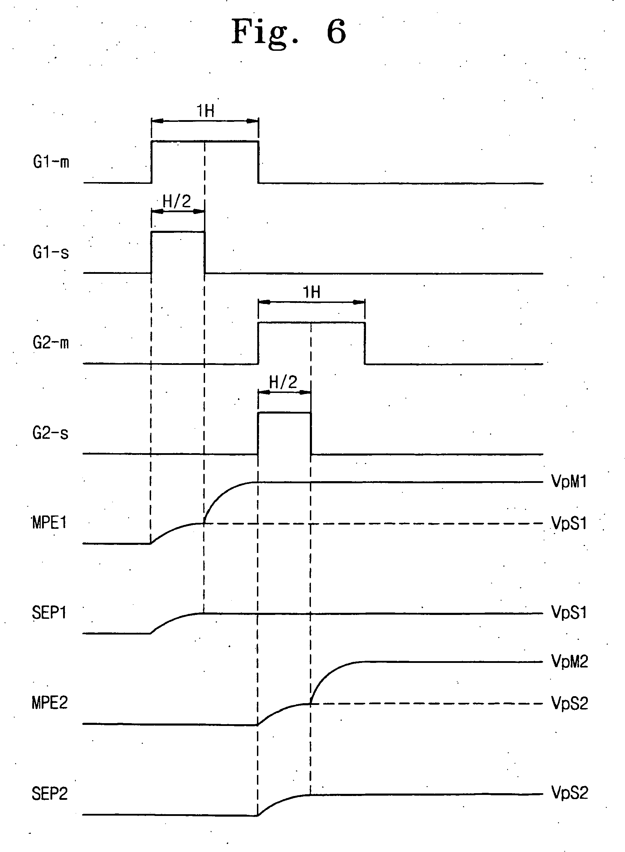

FIG. 6 shows a timing diagram for waveforms of a first main pixel voltage, a second main pixel voltage, a first sub-pixel voltage, and a second sub-pixel voltage corresponding to a first main gate pulse G1-m, a second main gate pulse G2-m, a first sub-gate pulse G1-s, and a second sub-gate pulse G2-s.

**Referring** to FIG. 2, FIG. 3, FIG. 4, FIG. 5, and FIG. 6, the first main thin film transistor T1-m is turned on in response to the first main gate pulse G1-m being at a high level during the 1H period, and the first sub-thin film transistor T1-s is turned on in response to the first sub-gate pulse G1-s being at a high level during the first H/2 period of the 1H period.

**A** first sub-pixel voltage VpS1 may be applied to the first data line DL1 during the first H/2 period of the 1H period. The first sub-pixel voltage VpS1 may be applied to the first main pixel electrode MPE1 through the first main thin film transistor T1-m when turned on and to the first sub-pixel electrode SPE1 through the first sub-thin film transistor T1-s when turned on.

Although the first main thin film transistor T1-m is turned on when the first main gate pulse G1-m is at a high level during the second H/2 period of the 1H period, the first sub-thin film transistor T1-s turns off when first sub-gate pulse G1-s shifts to a low level. In addition, a first main pixel voltage VpM1 may be applied to the first data line DL1 during the second H/2 period of the 1H period. Accordingly, the first main pixel voltage VpM1 may be applied to only the first main pixel electrode MPE1 through the first main thin film transistor T1-m when turned on.

Since the first main pixel electrode MPE1 may be charged with the first sub-pixel voltage VpS 1 during the first H/2 period of the 1H period, the first main pixel electrode MPE1 can be charged with the first main pixel voltage VpM1 within a shorter time during the second H/2 period of the 1H period. Accordingly, the S-PVA LCD apparatus 500 having the above structure can improve the response speed of liquid crystals corresponding to the main pixel.

Meanwhile, the second main thin film transistor T2-m may be turned on in response to the second main gate pulse G2-m being at a high level during the next 1H period, and the second sub-thin film transistor T2-s may be turned on in response to the second sub-gate pulse G2-s being at a high level during the first H/2 period in the next 1H period.

A second sub-pixel voltage VpS2 may be applied to the first data line DL1 during the first H/2 period in the next 1H period. The second sub-pixel voltage VpS2 may be applied to the second main pixel electrode MPE2 through the second main thin film transistor T2-m when turned on and to the second sub-pixel electrode SPE2 through the second sub-thin film transistor T2-s when turned on.

Although the second main thin film transistor T2-m is turned on when the second main gate pulse G2-m is at a high level during the second H/2 period in the next 1H period, the second sub-thin film transistor T2-s turns off when the second sub-gate pulse G2-s shifts to a low level. In addition, a second main pixel voltage VpM2 may be applied to only the first data line DL 1 during the second H/2 period of the next H1 period. Accordingly, the second main pixel voltage VpM2 may be applied to only the second main pixel electrode MPE2 through the second main thin film transistor T2-m when turned on.

Since the second main pixel electrode MPE2 may be charged with the second sub-pixel voltage VpS2 during the first H/2 period of the next 1H period, the second main pixel electrode MPE2 can be charged with the second main pixel voltage VpM2 within a shorter time during the second H/2 period of the next 1 H period. Accordingly, the S-PVA LCD apparatus 500 having the above structure can improve the response speed of liquid crystals corresponding to the main pixel.

According to the LCD apparatus having the above structure, the sub-gate driver may include a plurality of inverters, which receive a main gate pulse and a clock signal delayed from the clock signal applied to the main gate driver by the H/2 period, to output the sub-gate pulses.

Therefore, the sub-gate driver can be operated by using a smaller number of transistors as compared with the main gate driver. As a result, the size of the sub-gate driver can be reduced. In addition, the driving frequency of the main gate driver and the sub-gate driver is maintained at a constant frequency, thereby reducing power consumption of the LCD apparatus.

It will be apparent to those skilled in the art that various modifications and variation can be made in the present invention without departing from the scope of the invention as defined in the appended claims.

## Claims

1. A liquid crystal display (LCD) apparatus, comprising:
a first substrate (110) including a plurality of main gate lines (GL1-m to GLn-m), a plurality of sub-gate lines (GL1-s to GLn-s), a plurality of data lines (DL1 to DLm), and a pixel, the pixel including a main pixel comprising a main thin film transistor (T1-m to Tn-m) connected to a data line (DL1) and having gate connected to a first main gate line (GL1-m to GLn-m), and a sub-pixel comprising a sub-thin film transistor (T1-s to Tn-s) connected to the data line (DL1) and having gate connected to a first sub-gate line (GL1-s to GLn-s), wherein the main pixel and the sub-pixel are directly relating one to the other forming domains having different grays;
a second substrate (120) coupled with the first substrate (110) and facing the first substrate (110);
a main gate driver (210) comprises a shift register having a first stage (SRC1) and a second stage (SRC2) connected in series, the first stage (SRC1) to apply a first main gate pulse (G1-m) to the first main gate line (GL1-m) during a first period of a duration 1H, wherein the first stage (SRC1) receives a first clock signal (CK-L) having a high level during a period corresponding to the first period to output the first main gate pulse (G1-m) when the first clock signal (CK-L) has a high level, and the second stage (SRC2) receives a second clock signal (CKB-L) having an inverted level relative to the first clock signal (CK-L) to output a second main gate pulse (G2-m) to a second main gate line (G2-m) when the second clock signal (CKB-L) has a high level;
a sub-gate driver (220) to apply a first sub-gate pulse (G1-s) to the first sub-gate line (GL1-s to GLn-s) during a second period of a duration H/2, wherein the second period is completely included in the first period; and
a data driver (310) to apply a sub-pixel voltage (VpS1; VpS2) to the data line (DL1 to DLm) during the second period, and to apply a main pixel voltage (VpM1; VpM2) to the data line (DL1 to DLm) during a third period of a duration H/2 being completely included in the first period that is different from the second period, wherein the third period takes place after the completion of the second period;
wherein the main thin film transistor (T1-m to Tn-m) is adapted, in response to the first sub-gate pulse, to output the sub-pixel voltage (VpS1, VpS2) to the main pixel during the second period, and to output the main pixel voltage (VpM1; VpM2) to the main pixel during the third period in response to the first main gate pulse (G1-m); and the sub-thin film transistor (T1-s to Tn-s) is adapted to output the sub-pixel voltage (VpS1; VpS2) to the sub-pixel during the first period in response to the first sub-gate pulse,
**characterized in that**
the sub-gate driver (220) comprises a first inverter (INC1) and a second inverter (INC2), wherein
the first inverter (INC1) is adapted to receive the first main gate pulse (G1-m) and to receive a third clock signal (CK-R) having a low level during a period corresponding to the second period so as to output the first sub-gate pulse (G1-s) to the first sub-gate line (GL1-s) during the second period when the third crock signal (CK-R) has a low level, and
the second inverter (INC2) is adapted to receive the second main gate pulse (G2-m) and to receive a fourth clock signal (CKB-R) having an inverted level relative to the third clock signal (CK-R) so as to output the second sub-gate pulse (G2-s) to a second sub-gate line (G2-s) when the fourth clock signal (CKB-R) has a low level, and
the main pixel voltage (VpM1; VpM2) has a level higher than the level of the sub-pixel voltage (VpS1; VpS2).

2. The display apparatus of claim 1, wherein the main gate driver (210) is directly arranged on the first substrate (110) through a thin film forming process.

3. The display apparatus of claim 1, wherein the first stage (SRC1) comprises a switching section (217) having a structure substantially similar to a structure of an inverter.

4. The display apparatus of claim 1, wherein the sub-gate driver (220) is directly arranged on the first substrate (110) through a thin film forming process.

5. The display apparatus of claim 1, wherein the first inverter (INC1) comprises:
a sub-pull up section to output the first main gate pulse (G1-m) to an output terminal during the second period; and
a discharge section to discharge the first main gate pulse (G1-m) being output to the output terminal to a level corresponding to a level of a gate off voltage (Voff) during the third period.

6. The display apparatus of claim 5, wherein the first inverter (INC1) further comprises:
an input terminal (IN) to receive the first main gate pulse (G1-m);
a clock terminal (CK) to receive the third clock signal (CK-R); and
a voltage input terminal (Vin) to receive the gate off voltage (Voff).

7. The display apparatus of claim 1, wherein the fourth clock signal (CKB-R) is applied to a clock terminal (CK) of the second inverter (INC2).

8. The display apparatus of claim 7, wherein the third clock signal (CK-R) is delayed relative to the first clock signal (CK-L) by a time equal to the second period, and the fourth clock signal (CKB-R) is delayed relative to the second clock signal (CKB-L) by a time equal to the third period.

9. The display apparatus of claim 1, wherein the main pixel comprises a main pixel electrode (MPE) connected to an output electrode of the main thin film transistor (T1-m to Tn-m) to receive the main pixel voltage (VpM1; VpM2), and
wherein the sub-pixel comprises a sub-pixel electrode (SPE) connected to an output electrode of the sub-thin film transistor (T1-s to Tn-s) to receive the sub-pixel voltage (VpS1; VpS2).

10. The display apparatus of claim 1, wherein, during the second period, the sub-thin film transistor (T1-s to Tn-s) applies the sub-pixel voltage (VpS1; VpS2) to the sub-pixel electrode (SPE) in response to the first sub-gate pulse, and the main thin film transistor (T1-m to Tn-m) charges the main pixel electrode (MPE) with the sub-pixel voltage (VpS1; VpS2) in response to the first main gate pulse (G1-m).

11. The display apparatus of claim 10, wherein, during the third period, the main thin film transistor (T1-m to Tn-m) applies the main pixel voltage (VpM1; VpM2) to the main pixel electrode (MPE), and the sub-thin film transistor (T1-s to Tn-s) is turned off in response to first the sub-gate pulse.

## Patentansprüche

1. Flüssigkristallanzeige (LCD)-Vorrichtung, umfassend:
ein erstes Substrat (110) mit einer Vielzahl von Hauptgateleitungen (GL1-m bis GLn-m), einer Vielzahl von Subgateleitungen (GL1-s bis GLn-s), einer Vielzahl von Datenleitungen (DL1 bis DLm) und einem Pixel, wobei das Pixel einen Haupt-Dünnfilmtransistor (T1-m bis Tn-m), der mit einer Datenleitung (DL1) verbunden ist und ein mit einer ersten Hauptgateleitung (GL1-m bis GLn-m) verbundenes Gate aufweist, und ein Subpixel umfasst, das einen mit der Datenleitung (DL1) verbundenen Sub-Dünnfilmtransistor (T1-s bis Tn-s) und ein mit einer ersten Subgateleitung (GL1-s bis GLn-s) verbundenes Gate aufweist, wobei das Hauptpixel und
das Subpixel sich direkt aufeinander beziehen und dabei Bereiche mit unterschiedlichen Grautönen bilden,
ein zweites Substrat (120), das mit dem ersten Substrat (110) gekoppelt und dem ersten Substrat (110) zugewandt ist;
wobei ein Hauptgate-Treiber (210) ein Schieberegister mit einer ersten Stufe (SRC1) und einer zweiten Stufe (SRC2) umfasst, die in Reihe geschaltet sind, wobei die erste Stufe (SRC1) einen ersten Hauptgateimpuls (G1-m) an die erste Hauptgateleitung (GL1-m) während eines ersten Zeitraums einer Dauer 1H anlegt, die erste Stufe (SRC1) ein erstes Taktsignal (CK-L) mit einem hohen Pegel während eines dem ersten Zeitraum entsprechenden Zeitraums empfängt, um den ersten Hauptgateimpuls (G1-m) auszugeben, wenn das erste Taktsignal (CK-L) einen hohen Pegel aufweist, und die zweite Stufe (SRC2) ein zweites Taktsignal (CKB-L) mit einem entgegengesetzten Pegel zum ersten Taktsignal (CK-L) empfängt, um einen zweiten Hauptgateimpuls (G2-m) an eine zweite Hauptgateleitung (G2-m) auszugeben, wenn das zweite Taktsignal (CKB-L) einen hohen Pegel aufweist;
einen Subgate-Treiber (220) zum Anlegen eines ersten Subgateimpulses (G1-s) an die erste Subgateleitung (GL1-s bis GLn-s) während eines zweiten Zeitraums einer Dauer H/2, wobei der zweite Zeitraum vollständig in dem ersten Zeitraum enthalten ist, und
einen Datentreiber (310) zum Anlegen einer Subpixelspannung (VpS1 ; VpS2) an die Datenleitung (DL1 bis DLm) während des zweiten Zeitraums und zum Anlegen einer Haupt-Pixelspannung (VpM1; VpM2) an die Datenleitung (DL1 bis DLm) während eines dritten Zeitraums einer Dauer H/2, der vollständig in dem ersten Zeitraum enthalten ist und sich vom zweiten Zeitraum unterscheidet, wobei der dritte Zeitraum nach Ablauf des zweiten Zeitraums folgt;
wobei der Haupt-Dünnfilmtransistor (T1-m bis Tn-m) dazu eingerichtet ist, als Antwort auf den ersten Subgateimpuls die Subpixelspannung (VpS1, VpS2) an das Hauptpixel während des zweiten Zeitraums auszugeben, und die Hauptpixelspannung (VpM1 VpM2) an das Hauptpixel während des dritten Zeitraums als Antwort auf den ersten Hauptgateimpuls (G1-m) auszugeben, und der Sub-Dünnfilmtransistor (T1-s bis Tn-s) dazu eingerichtet ist, die Subpixelspannung (VpS1; VpS2) an das Subpixel während des ersten Zeitraums als Antwort auf den ersten Subgateimpuls auszugeben,
**dadurch gekennzeichnet, dass**
der Subgate-Treiber (220) einen ersten Inverter (INC1) und einen zweiten Inverter (INC2) umfasst, wobei
der erste Inverter (INC1) dazu eingerichtet ist, den ersten Hauptgateimpuls (G1-m) zu empfangen und ein drittes Taktsignal (CK-R) mit einem niedrigen Pegel während eines Zeitraums zu empfangen, der dem zweiten Zeitraum entspricht, um den ersten Subgateimpuls (G1-s) an die erste Subgateleitung (GL1-s) während des zweiten Zeitraums auszugeben, wenn dass dritte Taktsignal (CK-R) einen niedrigen Pegel aufweist, und
der zweite Inverter (INC2) dazu eingerichtet ist, den zweiten Hauptgateimpuls (G2-m) zu empfangen und ein viertes Taktsignal (CKB-R) mit einem entgegengesetzten Pegel zum dritten Taktsignal (CK-R) zu empfangen, um den zweiten Subgateimpuls (G2-s) an eine zweites Subgateleitung (GL2-s) auszugeben, wenn dass vierte Taktsignal (CKB-R) einen niedrigen Pegel aufweist, und
die Hauptpixelspannung (VpM1 VpM2) einen höheren Pegel als die Subpixelspannung (VpS1; VpS2) aufweist.

2. Anzeigevorrichtung nach Anspruch 1, wobei der Hauptgatetreiber (210) durch ein Dünnfilmbildungsverfahren unmittelbar auf dem ersten Substrat (110) angeordnet ist.

3. Anzeigevorrichtung nach Anspruch 1, wobei die erste Stufe (SRC1) einen Schaltabschnitt (217) mit einer Struktur aufweist, die im Wesentlichen einer Struktur eines Inverters gleicht.

4. Anzeigevorrichtung nach Anspruch 1, wobei der Subgatetreiber (220) durch ein Dünnfilmbildungsverfahren umittelbar auf dem ersten Substrat (110) angeordnet ist.

5. Anzeigevorrichtung nach Anspruch 1, wobei der erste Inverter (INC1) folgendes umfasst:
einen Sub-Pull-Up-Abschnitt zur Ausgabe des ersten Hauptgateimpulses (G1-m) an ein Ausgangsterminal während des zweiten Zeitraums und
einen Entladeabschnitt zum Entladen des ersten Hauptgateimpulses (G1-m), der an das Ausgangsterminal ausgegeben wird, bis zu einem Pegel, entsprechend einem Pegel einer Gate-Aus-Spannung (Voff) während des dritten Zeitraums.

6. Anzeigevorrichtung nach Anspruch 5, wobei der erste Inverter (INC1) ferner folgendes umfasst:
ein Eingangsterminal (IN) zum Empfangen des ersten Hauptgateimpulses (G1-m,
ein Taktterminal (CK) zum Empfangen des dritten Taktsignals (CK-R) und
ein Spannungseingangsterminal (Vin) zum Empfangen der Gate-Aus-Spannung (Voff).

7. Anzeigevorrichtung nach Anspruch 1, wobei das vierte Taktsignal (CKB-R) an einem Taktterminal (CK) des zweiten Inverters (INC2) anliegt.

8. Anzeigevorrichtung nach Anspruch 7, wobei das dritte Taktsignal (CK-R) relativ zum ersten Taktsignal (CK-L) um eine Zeit verzögert ist, die gleich dem zweiten Zeitraum ist, und das vierte Taktsignal (CKB-R) relativ zum zweiten Taktsignal (CKB-L) um eine Zeit verzögert ist, die gleich dem dritten Zeitraum ist.

9. Anzeigevorrichtung nach Anspruch 1, wobei das Hauptpixel eine Hauptpixelelektrode (MPE) umfasst, die mit einer Ausgangselektrode des Haupt-Dünnflmtransistors (T1-m bis Tn-m) verbunden ist, um die Hauptpixelspannung (VpM1 VpM2) zu empfangen, und
wobei das Subpixel eine Subpixelelektrode (SPE) umfasst, die mit einer Ausgangselektrode des Sub-Dünnfilmtransistors (T1-s bis Tn-s) verbunden ist, um die Subpixelspannung (VpS1 VpS2) zu empfangen.

10. Anzeigevorrichtung nach Anspruch 1, wobei während des zweiten Zeitraums der Sub-Dünnfilmtransistor (T1-s bis Tn-s) die Subpixelspannung (VpS1; VpS2) an die Subpixelelektrode (SPE) als Antwort auf den ersten Subgateimpuls anlegt und der Haupt-Dünnfilmtransistor (T1-m bis Tn-m) die Hauptpixelelektrode (MPE) mit der Subpixelspannung (VpS1 VpS2) als Antwort auf den ersten Hauptgateimpuls (G1-m) auflädt.

11. Anzeigevorrichtung nach Anspruch 10, wobei während des dritten Zeitraums der Haupt-Dünnfilmtransistor (T1-m bis Tn-m) die Hauptpixelspannung (VpM1; VpM2) an die Hauptpixelelektrode (MPE) anlegt und der Sub-Dünnfilmtransistor (T1-s bis Tn-s) als Antwort auf den ersten Subgateimpuls abgeschaltet wird.

## Revendications

1. Un dispositif d'affichage à cristaux liquides (LCD), comprenant :
un premier substrat (110) incluant une pluralité de lignes de barrière principale (GL1-m à GLn-m), une pluralité de lignes de sous-barrières (GL1-s à GLn-s), une pluralité de lignes de données (DL1 à DLm), et un pixel, le pixel incluant un pixel principal comprenant un transistor à couches minces principal (T1-m à Tn-m) connecté à une ligne de données (DL1) et ayant une barrière connectée à une première ligne de barrière principale (GL1-m à GLn-m), et un sous-pixel comprenant un sous-transistor à couches minces (T1-s à Tn-s) connecté à la ligne de données (DL1) et ayant une barrière connectée à une première ligne de sous-barrière (GL1-s à GLn-s), où le pixel principal et le sous-pixel sont directement liés l'un à l'autre formant des domaines ayant différents gris ;
un deuxième substrat (120) raccordé au premier substrat (110) et faisant face au premier substrat (110) ;
un pilote de barrière principal (210) comprend un registre à décalage ayant une première étape (SRC1) et une deuxième étape (SRC2) connectées en série, la première étape (SRC1) pour appliquer une première impulsion de barrière principale (G1-m) à la première ligne de barrière principale (GL1-m) pendant une première période d'une durée d'1H, où la première étape (SRC1) reçoit un premier signal d'horloge (CK-L) ayant un niveau élevé pendant une période correspondant à la première période pour faire sortir la première impulsion de barrière principale (G1-m) lorsque le premier signal d'horloge (CK-L) possède un niveau élevé, et la deuxième étape (SRC2) reçoit un deuxième signal d'horloge (CKB-L) ayant un niveau inversé relatif au premier signal d'horloge (CK-L) pour faire sortir une deuxième impulsion de barrière principale (G2-m) vers une deuxième ligne de barrière principale (G2-m) lorsque le deuxième signal d'horloge (CKB-L) possède un niveau élevé ;
un pilote de sous-barrière (220) pour appliquer une première impulsion de sous-barrière (G1-s à la première ligne de sous-barrière (GL1-s à GLn-s) pendant une deuxième période d'une durée H/2, où la deuxième période est complètement incluse dans la première période ; et
un pilote de données (310) pour appliquer une tension de sous-pixel (VpS1 ; VpS2) à la ligne de données (DL1 à DLm) pendant la deuxième période, et pour appliquer une tension de pixel principale (VpM1 VpM2) à la ligne de données (DL1 à DLm) pendant une troisième période d'une durée H/2 étant complètement incluse dans la première période qui est différente de la deuxième période, où la troisième période a lieu après la réalisation de la deuxième période ;
où le transistor à couches minces principal (T1-m à Tn-m) est adapté, en réponse à la première impulsion de sous-barrière, pour faire sortir la tension de sous-pixel (VpS1 VpS2) vers le pixel principal pendant la deuxième période, et pour faire sortir la tension de pixel principale (VpM1 ; VpM2) vers le pixel principal pendant la troisième période en réponse à la première impulsion de la barrière principale (G1-m) ; et le sous-transistor à couches minces (T1-s à Tn-s) est adapté pour faire sortir la tension de sous-pixel (VpS1 ; VpS2) vers le sous-pixel pendant la première période en réponse à la première impulsion de sous-barrière,
**caractérisé en ce que**
le pilote de la sous-barrière (220) comprend un premier inverseur (INC1) et un deuxième inverseur (INC2), où
le premier inverseur (INC1) est adapté pour recevoir la première impulsion de barrière principale (G1-m) et pour recevoir un troisième signal d'horloge (CK-R) ayant un niveau bas pendant une période correspondant à la deuxième période afin de faire sortir la première impulsion de sous-barrière (G1-s) vers la première ligne de sous-barrière (GL1-s) pendant la deuxième période lorsque le troisième signal d'horloge (CK-R) possède un niveau bas, et
le deuxième inverseur (INC2) est adapté pour recevoir la deuxième impulsion de barrière principale (G2-m) et pour recevoir un quatrième signal d'horloge (CKB-R) ayant un niveau inversé relatif au troisième signal d'horloge (CK-R) afin de faire sortir la deuxième impulsion de sous-barrière (G2-s) vers une deuxième ligne de sous-barrière (GL2-s) lorsque le quatrième signal d'horloge (CKB-R) possède un niveau bas, et
la tension de pixel principale (VpM1 ; VpM2) possède un niveau supérieur au niveau de la tension de sous-pixel (VpS1 ; VpS2).

2. Le dispositif d'affichage de la revendication 1, où le pilote de barrière principal (210) est directement disposé sur le premier substrat (110) au travers d'un processus de formation à couches minces.

3. Le dispositif d'affichage de la revendication 1, où la première étape (SRC1) comprend une section d'allumage (217) ayant une structure substantiellement similaire à une structure d'un inverseur.

4. Le dispositif d'affichage de la revendication 1, où le pilote de sous-barrière (220) est directement disposé sur le premier substrat (110) au travers d'un processus de formation à couches minces.

5. Le dispositif d'affichage de la revendication 1, où le premier inverseur (INC1) comprend :
une sous-section de rappel vers le niveau haut pour faire sortir la première impulsion de barrière principale (G1-m) vers un terminal de sortie pendant la deuxième période ; et
une section de décharge pour décharger la première impulsion de barrière principale (G1-m) étant sortie vers le terminal de sortie à un niveau correspondant à un niveau d'une barrière hors tension (Voff) pendant la troisième période.

6. Le dispositif d'affichage de la revendication 5, où le premier inverseur (INC1) comprend de plus :
un terminal d'entrée (IN) pour recevoir la première impulsion de barrière principale (G1-m) ;
un terminal à horloge (CK) pour recevoir le troisième signal d'horloge (CK-R) ; et
un terminal d'entrée de tension (Vin) pour recevoir la mise hors tension de la barrière (Voff).

7. Le dispositif d'affichage de la revendication 1, où le quatrième signal d'horloge (CKB-R) est appliqué à un terminal à horloge (CK) du deuxième inverseur (INC2).

8. Le dispositif d'affichage de la revendication 7, où le troisième signal d'horloge (CK-R) est retardé par rapport au premier signal d'horloge (CK-L) d'un temps égal à la seconde période, et le quatrième signal d'horloge (CKB-R) est retardé par rapport au deuxième signal d'horloge (CKB-L) d'un temps égal à la troisième période.

9. Le dispositif d'affichage de la revendication 1, où le pixel principal comprend une électrode de pixel principal (MPE) connectée à une électrode de sortie du transistor à couches minces principal (T1-m à Tn-m) pour recevoir la tension de pixel principale (VpM1 VpM2), et
où le sous-pixel comprend une électrode de sous-pixel (SPE) connectée à une électrode de sortie du sous-transistor à couches minces (T1-s à Tn-s) pour recevoir la tension de sous-pixel (VpS1 ; VpS2).

10. Le dispositif d'affichage de la revendication 1, où, pendant la deuxième période, le sous-transistor à couches minces (T1-s à Tn-s) applique la tension de sous-pixel (VpS1 VpS2) à l'électrode de sous-pixel (SPE) en réponse à la première impulsion de sous-barrière, et le transistor à couches minces principal (T1-m à Tn-m) charge l'électrode à pixel principale (MPE) avec la tension de sous-pixel (VpS1 ; VpS2) en réponse à la première impulsion de barrière principale (G1-m).

11. Le dispositif d'affichage de la revendication 10, où, pendant la troisième période, le transistor à couches minces principal (T1-m à Tn-m) applique la tension de pixel principale (VpM1 ; VpM2) à l'électrode à pixel principale (MPE) et le sous-transistor à couches minces (T1-s à Tn-s) est mis hors tension en réponse à la première impulsion de sous-barrière.
